# EUROPEAN PATENT APPLICATION

(11) **EP 1 898 221 A2**
(43) Date of publication of application: **12.03.2008**
(21) Application number: 07014568.5
(22) Date of filing: 25.07.2007
(51) Int. Cl.: G01N 35/02

(54) **Analyzer with automatically actuated movable closure of pipetting openings**

(30) Priority: 11.09.2006 EP 06018932
(71) Applicant: F.HOFFMANN-LA ROCHE AG, 4070 Basel (CH); Roche Diagnostics GmbH, 68305 Mannheim (DE)
(72) Inventor: Schacher, Gottlieb, 6010 Kriens (CH); Gut, Raphael, 6004 Luzern (CH)
(74) Representative: Ventocilla, Abraham

(57) **Abstract**

A clinical chemistry analytical apparatus for automatically analyzing a plurality of samples of biological fluids, wherein aliquots of said samples are mixed with aliquots of selected reagent liquids in reaction cuvettes for forming sample-reagent-mixtures contained in a plurality of reaction cuvettes. The apparatus comprises: (a) an array of reagent containers and an array of reaction cuvettes , each of the reagent containers and each of the reaction cuvettes having an open upper end, (b) an automatic pipetting unit (12) having a pipetting needle (13) for taking an aliquot of reagent from one of said reagent containers and for delivering said aliquot into one of said reaction cuvettes, the automatic pipetting (12) unit having a transport device (31) for moving the pipetting needle (13) to at least one pipetting position, (c) a movable cover (14) covering a chamber (18) in which the reagent containers are stored, the cover (14) having at least one pipetting opening (15, 16) which allows insertion of the pipetting needle (13) therethrough, (d) a closure mechanism (17) which in a first state closes the pipetting opening (15, 16) and in a second state leaves it open, (e) transport means for automatically transporting each of the reagent containers to a pipetting position, at which the opening at the upper end of the reagent container is aligned with the pipetting opening (15, 16) of the cover (14), and (f) means for automatically actuating the closure mechanism (17) to bring it into its second state before introducing the pipetting needle (13) through the pipetting opening (15, 16) and for automatically actuating the closure mechanism (17) to bring it into its first state after withdrawal of the pipetting needle (13) from the pipetting opening (15, 16). The means for automatically actuating said closure mechanism (17) are adapted for being actuated by a displacement of said transport device (31) associated with the motion thereof that moves the pipetting needle (13) to the at least one pipetting position, respectively away from the at least one pipetting position.

## Description

### Field of the invention

The invention concerns a clinical chemistry analytical apparatus according to the preamble of claim 1.

### Background

An analytical apparatus of the above mentioned kind contains a plurality of reagent containers each of which contains a reagent in liquid form. Each of the reagent containers has an opening at its upper end. The operation of the apparatus includes pipetting operations which include insertion of a pipetting needle of an automatic pipetting unit through the upper opening of a reagent container for aspirating an aliquot of reagent liquid and dispensing of this aliquot to a selected reaction cuvette.

Since the reagent containers should be kept open in order to facilitate the above mentioned pipetting operation, and since the reagent containers are refrigerated at a constant temperature to prevent deterioration of the reagents and to ensure extended stability thereof, there is some loss of reagents by evaporation and there is some amount of water vapor condensation in the reagent containers and in the interior of the housing where the reagent containers are lodged. These are undesirable effects which affects the reliability of the measurements carried out with the analytical apparatus. The latter effects are particularly important when the temperature of the environment of the apparatus is relatively high.

There is therefore a need for an analytical apparatus of the above mentioned kind which comprises means for eliminating or at least substantially reducing the amount of reagents losses by evaporation and the amount of water vapor condensation in the reagent containers.

European Patent Application EP 0410645 A2 describes clinical chemistry analytical apparatus wherein access to a particular reagent dispenser well is achieved through a selectively operable access port in a reagent cover. The access port is normally closed by a shutter which is operable by a drive and control mechanismus to be displaced from the access port and thereby allow a probe to be lowered into the reagent dispenser well for aspiration of an aliquout of liquid reagent therefrom.

### Summary of the invention

An aim of the invention is to provide an analytical apparatus of the above mentioned kind which comprises means for eliminating or at least substantially reducing the amount of reagents losses by evaporation and the amount of water vapor condensation in the reagent containers.

According to the invention, the above aim is achieved by means of an analytical apparatus defined by claim 1. The dependant claims define preferred embodiments.

The main advantages obtained with an analytical apparatus according to the invention are that it makes possible to eliminating or at least substantially reducing the amount of reagents losses by evaporation and the amount of water vapor condensation in the reagent containers, and that it makes possible to attain this aim with means the operation of which is highly reliable and the cost of which is so low that it causes only a very low increase of the manufacture costs of the analytical apparatus.

### Brief description of the drawings

The subject invention will now be described in terms of its preferred embodiments with reference to the accompanying drawings. These embodiments are set forth to aid the understanding of the invention, but are not to be construed as limiting.
- Fig. 1: shows an overall perspective view of an apparatus according to the invention.
- Fig. 2: shows a perspective view of the apparatus of Fig. 1 without cover.
- Fig. 3: shows a perspective view of reagent container assembly installed in the analyzer of Fig. 1, but without its cover and without any reagent container in it.
- Fig. 4: shows an enlarged view of a portion of Fig. 3.
- Fig. 5: shows a top view of the conveyor part of the analyzer shown in Fig. 2 and in particular reagent container assembly before it is loaded with reagent containers.
- Fig. 6: shows a cross-sectional view taken along a plane I-I in Fig. 5.
- Fig. 7: shows a perspective view of a single reagent container.
- Fig. 8: shows a perspective view of the apparatus of Figures 1 and 2 without the cover of its central part. Fig. 8 shows in particular the location of a first embodiment of a movable closure of the pipetting openings in that cover.
- Fig. 9: shows a perspective upside-down view of the cover of the central part of the analyzer of Figures 1 and 8. Fig. 9 shows in particular the location of the movable closure represented in Fig. 8.
- Fig. 10: shows a perspective view of the movable closure represented in Figures 8 and 9.
- Fig. 11: shows a perspective exploded view of the components of the movable closure represented in Fig. 10.
- Fig. 12: shows a perspective view of a part of the movable closure represented in Figures 10 and 11. Fig. 12 shows in particular a movable slide element which carries magnets and which is part of the movable closure.
- Fig. 13: shows a top view of the part of the movable closure shown by Fig. 12 with the slide element in a first position at which the slide element closes the pipetting openings of the cover of the central part of the apparatus of Figures 1, 2 and 8.
- Fig. 14: shows a top view of the part of the movable closure shown by Fig. 12 with the slide element in a second position at which openings of the slide element are aligned with the pipetting openings of the cover of the central part of the apparatus of Figures 1, 2 and 8. Fig. 14 thus shows the position of the slide element at which the pipetting openings are open and allow insertion of a pipetting needle therethrough.
- Fig. 15: shows a partial perspective view of the transport device which transports the pipetting needle and which carries a magnet for moving the slide element shown in Figures 12 to 14. Fig. 15 shows in particular that the latter magnet is attached to a plate which is part of the transport device which transports the pipetting needle.
- Figures 16 to 22: illustrate various positions of the magnet attached to the transport device of the pipetting needle with respect to the magnets attached to the slide element of the movable closure of the cover of the central part of the apparatus of Figures 1, 2 and 8.
- Fig. 23: shows a bottom plan view of a part of a second embodiment of a movable closure of the pipetting openings in the cover of the central part of the analyzer of Figures 1 and 8. Fig. 23 shows in particular slide elements which are part of that movable closure and which are in a position in which they close the pipetting openings in the cover of the central part of the analyzer of Figures 1 and 8.
- Fig. 24: shows a top plan view of the cover of the central part of the analyzer of Figures 1 and 8 and in particular pins which are part of the slide elements shown in Fig. 23.
- Fig. 25: shows a perspective view of the cover shown in Fig. 24
- Fig. 26: shows a perspective view of a part of the transport device which transports the pipetting needle. Fig. 26 shows in particular that the latter transport device carries a cam which is attached to a plate which is part of the transport device which transports the pipetting needle.
- Fig. 27: shows a perspective view which illustrates how the cam represented in Fig. 26 cooperates with the pins of the slide elements shown in Fig. 23 for displacing those elements to positions where they leave the pipetting openings open.
- Fig. 28: shows a bottom plan view of a part of the second embodiment of a movable closure represented in Fig. 23 with the slide elements in positions where they leave the pipetting openings open.

### Reference numerals used in drawings

- 11: housing
- 12: automatic pipetting unit
- 13: pipetting needle
- 14: movable cover
- 15: pipetting opening in cover 14
- 16: pipetting opening in cover 14
- 17: closure mechanism
- 18: chamber in housing 11
- 19: thermal insulation plate
- 21: slide element
- 22: permanent magnet attached to slide element 21
- 23: permanent magnet attached to slide element 21
- 24: opening in slide element 21
- 25: opening in slide element 21
- 26: upper plate
- 27: lower plate
- 31: transport device of pipetting needle 13
- 32: permanent magnet attached to transport device 31
- 33: lower plate of transport device 31
- 34: rail
- 35: opening of lower plate 33
- 41: slide element
- 42: slide element
- 43: slide element
- 44: slide element
- 51: spring
- 52: spring
- 53: spring
- 54: spring
- 61: pin
- 62: pin
- 63: pin
- 64: pin
- 71: elongated opening
- 72: elongated opening
- 73: elongated opening
- 74: elongated opening
- 81: cam
- 91: rotatable conveyor
- 92: reaction cuvette
- 93: reagent container assembly
- 94: sample tube area
- 95: photometer
- 96: conveyor driving means
- 97: array of chambers for receiving reagent containers
- 98: array of chambers for receiving reagent containers
- 99: reagent container
- 102: pocket of slide 21
- 103: pocket of slide 21
- 104: opening of upper plate 26
- 105: opening of upper plate 26
- 106: opening of lower plate 27
- 107: opening of lower plate 27
- 108: guide element
- 109: longitudinal axis
- 111: cover of reagent container assembly 93
- 112: opening in cover 111
- 113: opening in cover 111
- 114: reagent container
- 115: reagent container
- 116: housing of reagent container
- 121: arrow
- 122: arrow
- 123: arrow
- 124: arrow
- 131: thermal insulation plate
- X: axis
- Y: axis
- Z: axis

### Detailed description of the invention

Preferred embodiments are described hereinafter with reference to the accompanying drawings.

### Example of an analyzer

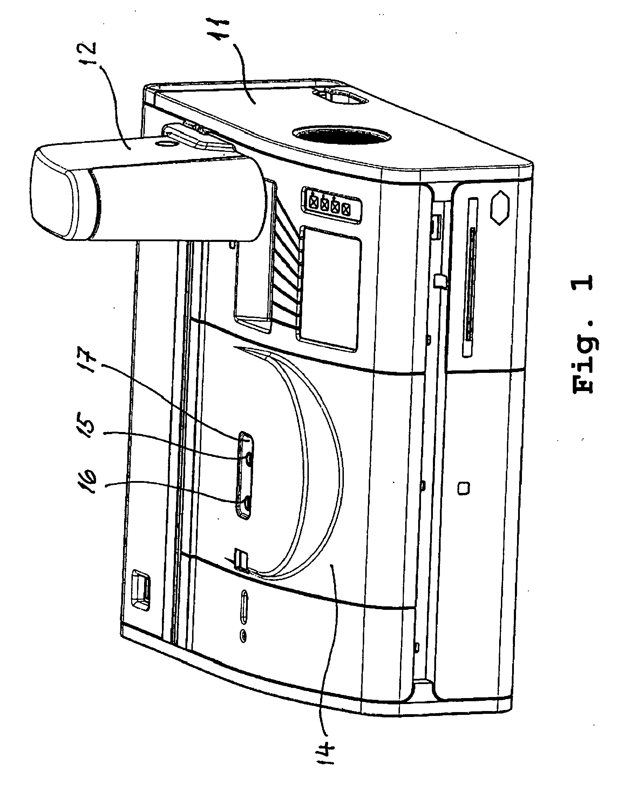

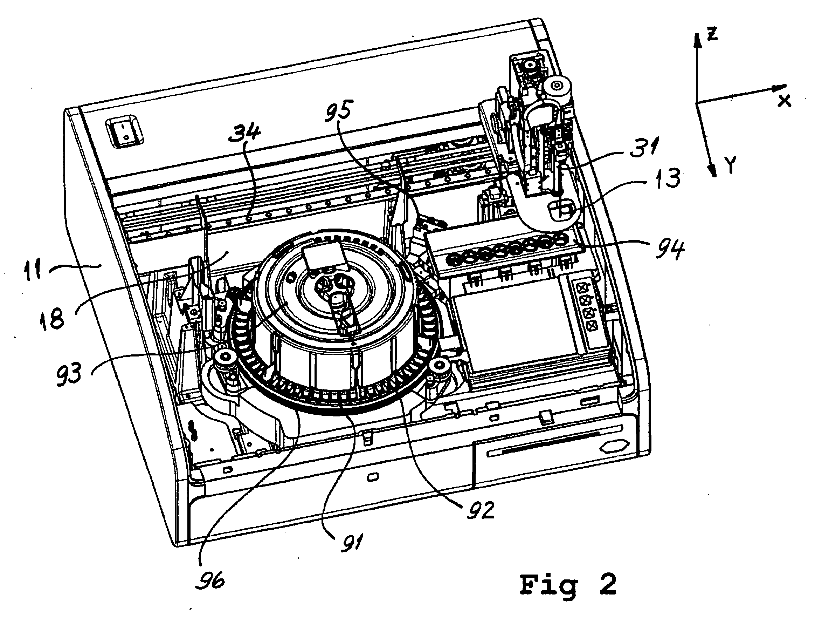

Fig. 1 shows an overall perspective view of an apparatus according to the invention, e.g. a clinical-chemistry analyzer for automatically analyzing a plurality of samples of biological fluids, wherein aliquots of said samples are mixed with aliquots of selected reagent liquids in reaction cuvettes for forming sample-reagent-mixtures contained in a plurality of reaction cuvettes. Fig. 2 shows a perspective view of the apparatus of Fig. 1 without covers which are part of housing 11.

The analyzer shown in Figures 1 and 2 has a housing 11 and an automatic pipetting unit 12.

An array of reagent containers and an array of reaction cuvettes described hereinafter are arranged in the interior of housing 11. Each of the reagent containers and reaction cuvettes has an opening at its upper end.

Automatic pipetting unit 12 has a pipetting needle 13 (shown in Fig. 2) for taking an aliquot of reagent from one of said reagent containers and for delivering said aliquot into one of said reaction cuvettes. Automatic pipetting unit 12 comprises a transport device 31 for moving pipetting needle 13 to at least one pipetting position. Transport device 31 is adapted for moving pipetting needle 13 along a first axis which extends in vertical direction and along a second axis which is perpendicular to the first axis. In the example decribed hereinafter with reference to Fig. 2, transport device 31 is mounted on a rail 34 which extends along the X-axis shown in Fig. 2. Transport device 31 is moved by suitable drive means along rail 34 and is thus able to move pipetting needle 13 along an axis parallel to the X-axis. Transport device 31 comprises drive means for moving pipetting needle 13 along an axis parallel to the Z-axis shown in Fig. 2. In the apparatus shown in Figures 1, 2 and 8 transport device 31 brings pipetting needle to predetermined pipetting positions which are aligned along one and the same axis and this axis is parallel to the X-axis represented in Fig. 2.

Housing 11 has a movable cover 14 which is e.g. a hinged cover. Cover 14 covers a chamber 18 in housing 11 and has a closed position at which it closes that chamber. In a preferred embodiment cover 14 is an air-tight closure of that chamber. The reagent assembly 93 and the reagent containers in that assembly are stored in chamber 18.

Cover 14 has at least one pipetting opening which allows insertion of pipetting needle 13 of the automatic pipetting unit therethrough. In the embodiment shown by Fig. 1 cover 14 has pipetting openings 15 and 16. The center of each of pipetting openings 15 and 16 is located at a corresponding pipetting position of the pipetting needle. A closure mechanism 17 for selectively closing and opening pipetting openings 15 and 16 is mounted on cover 14.

In a preferred embodiment pipetting openings are just large enough to allow insertion of pipetting needle 13 therethrough.

Closure mechanism 17 is adapted for being brought into a first state and into a second state. Pipetting openings 15 and 16 are closed when closure mechanism 17 is in the first state. Pipetting openings 15, 16 are open when closure mechanism 17 is in the second state.

The apparatus shown in Figures 1 and 2 further comprises means for automatically actuating closure mechanism 17 to bring it into its second state before introducing the pipetting needle 13 through at least one of the pipetting openings 15, 16 and for automatically actuating said closure mechanism to bring it into its first state after withdrawal of pipetting needle 13 from the pipetting opening.

In a preferred embodiment, the means for automatically actuating closure mechanism 17 are adapted for being actuated by a displacement of transport device 31 associated with the motion thereof that moves pipetting needle 13 along said second axis to said at least one pipetting position, respectively away from said at least one pipetting position.

In a preferred embodiment, the means for automatically actuating closure mechanism 17 bring it into its second state immediately before introducing said pipetting needle 13 through a pipetting opening 15, 16 and bring it into its first state immediately after withdrawal of pipetting needle 13 from pipetting opening 15, 16.

The apparatus shown in Figures 1 and 2 further comprises a rotatable conveyor 91 for automatically transporting each of the reagent containers to a pipetting position, at which the opening at the upper end of the reagent container is aligned with a pipetting opening of cover 14.

As shown by Fig. 2, rotatable conveyor 91 conveys reaction cuvettes 92 inserted in corresponding cavities of conveyor 91 along a circular path and also rotates a reagent container assembly 93 arranged in the central part of conveyor 91, so that reagent containers in reagent container assembly 93 are also transported along a circular path. Conveyor 91 is rotated by means of conveyor driving means 96.

A sample tube area 94 and a photometer 95 are located adjacent to conveyor 91.

Reaction cuvettes 92 inserted in the above mentioned cavities of conveyor 91 are held by a cuvette holder. Such a cuvette holder holds a plurality of reaction cuvettes 92. A cuvette holder and reaction cuvettes 92 held by a cuvette holder form a cuvette array. The analyzer comprises at least one such array. Usually reaction cuvettes of a plurality of such cuvette arrays are installed in corresponding cavities of conveyor 91. In the example shown by Fig. 2, conveyor 91 has cavities for receiving 60 reaction cuvettes distributed in 6 cuvette arrays each array having 10 reaction cuvettes.

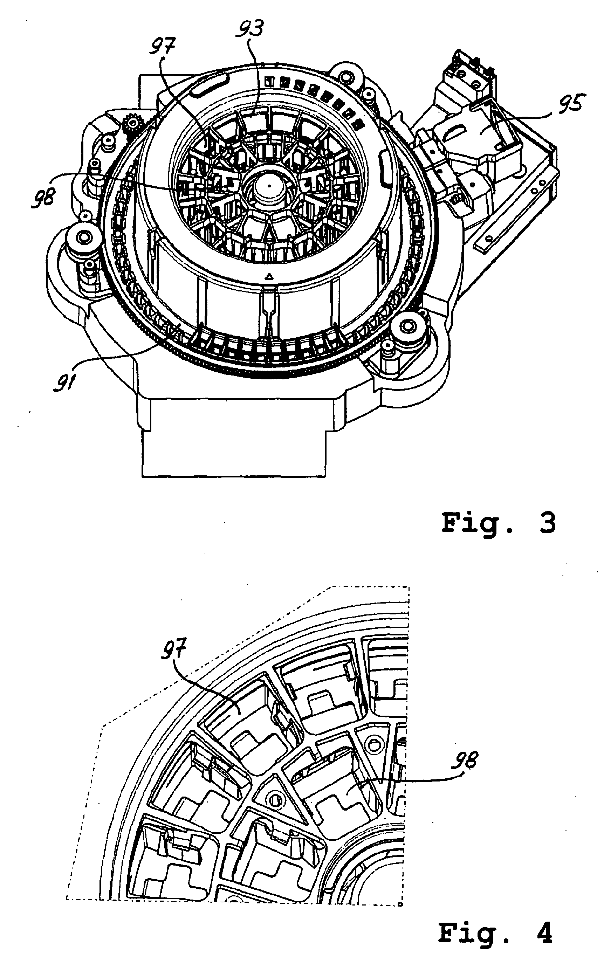

Fig. 3 shows a perspective view of reagent container assembly 93 installed in the analyzer, but without its cover and without any reagent container in it.

Reagent container assembly 93 is connected with conveyor 91, so that when conveyor is rotated reagent container assembly 93 rotates with conveyor 91.

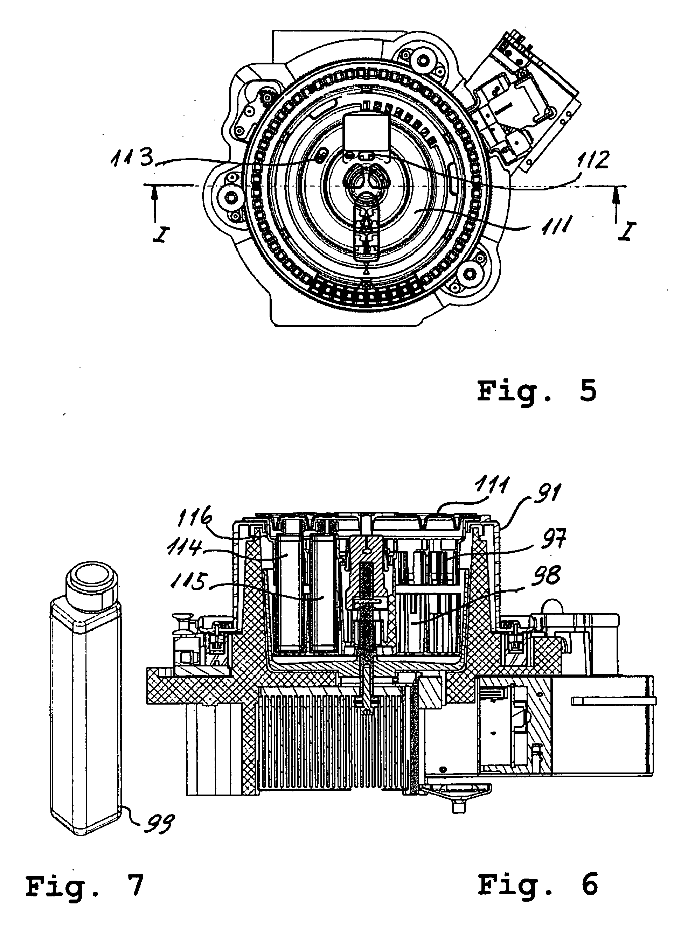

Fig. 4 shows an enlarged view of a portion of Fig. 3. As can be appreciated from Figures 3 and 4 reagent container assembly 93 comprises a housing 116 having two concentric arrays of chambers adapted for receiving reagent containers, a first circular array of chambers 97 and a second circular array of chambers 98.

Fig. 5 shows a top view of the conveyor part of the analyzer shown in Fig. 1 and in particular of reagent container assembly 93 before it is loaded with reagent containers.

Fig. 6 shows a cross-sectional view taken along a plane I-I in Fig. 5.

As shown in Figures 5 and 6 reagent container assembly 93 comprises a cover 111 and a housing 116 having the shape of a bucket. Cover 111 has openings 112 and 113 through which pipetting needle 13 is introduced into reagent containers lodged in the above mentioned circular arrays of chambers 97 and 98.

Fig. 7 shows a perspective view of a reagent container 99.

As shown by Figures 3 and 4, reagent container assembly 93 contains concentric arrays of chambers 97, 98 each of which is adapted for receiving a reagent container 99 shown by Fig. 7. Each of reagent containers 99 contains a specific reagent in liquid form. Each reagent container 99 carries an automatically readable label (not shown), e.g. a barcode label, which identifies the specific reagent contained in the reagent container.

### Example of a first closure mechanism for the pipetting openings

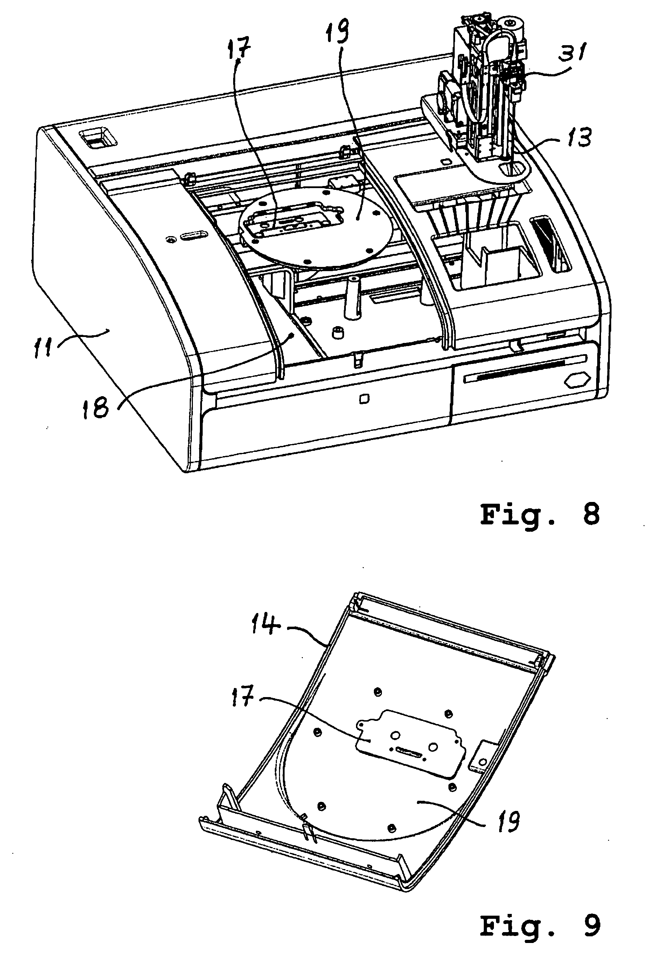

Fig. 8 shows a perspective view of the apparatus of Figures 1 and 2 without cover 14 of its central part. Fig. 8 shows in particular the location of a first embodiment of a closure mechanism 17 of the pipetting openings in cover 14 and the location of a thermal insulation plate 19 which is arranged between the inner surface of cover 14 and closure mechanism 17..

Fig. 9 shows a perspective upside-down view of cover 14.
Fig. 9 shows in particular closure mechanism 17 and thermal insulation plate 19 represented in Fig. 8 mounted on the inner surface of cover 14.

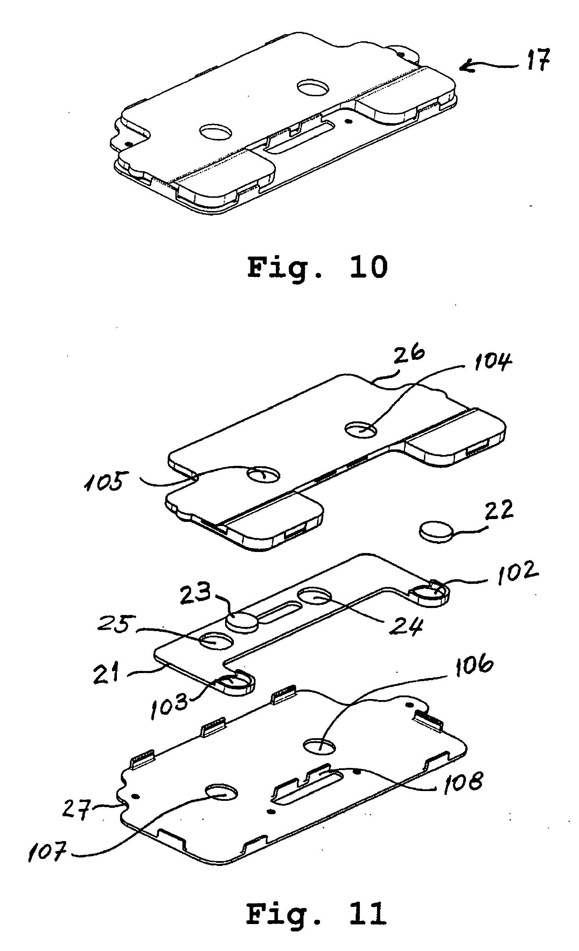

Fig. 10 shows a perspective view of closure mechanism 17 in Figures 8 and 9.

Fig. 11 shows a perspective exploded view of the components of closure mechanism 17 in Fig. 10.

As shown by Fig. 11 closure mechanism 17 comprises a slide element 21 which has a body and openings 24 and 25 in that body. These openings allows insertion of pipetting needle 13 therethrough when slide element 21 is in a position at which openings 24 and 25 of slide element are aligned with pipetting openings 15, 16 of cover 14.

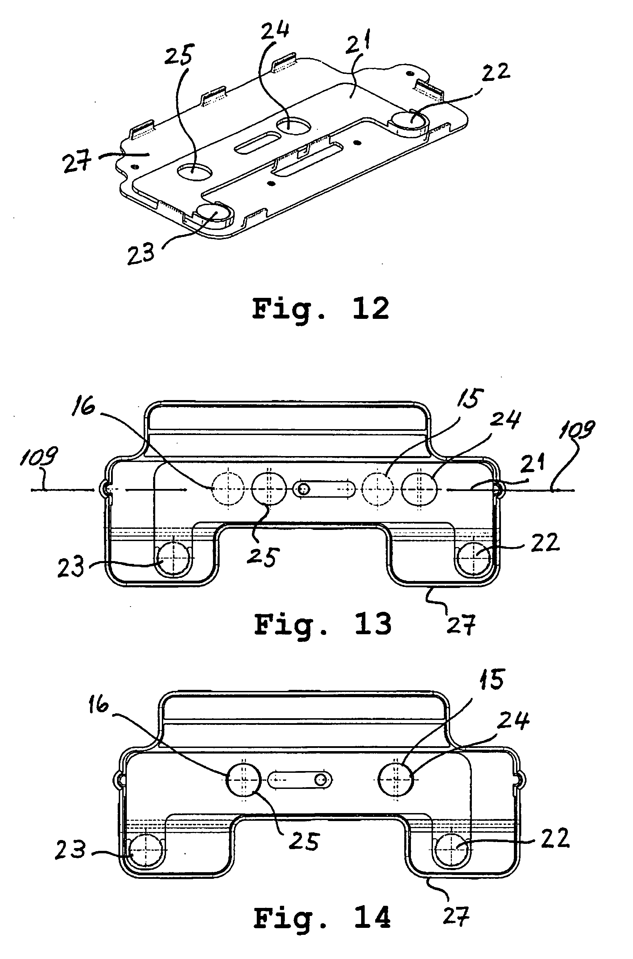

Before closure mechanism 17 is assembled, permanent magnets 22, 23 in Fig. 11 are positioned in pockets 102, 103 of slide element 21 and are attached thereto by suitable means, e.g. by a suitable adhesive. Fig. 12 shows the position of permanent magnets 22, 23 when these are attached to slide element 21 and this element is placed on lower plate 27.

Closure mechanism 17 represented in Figures 10 and 11 further comprises a housing for slide element 21 and this housing comprises an upper plate 26 and a lower plate 27. Upper plate 26 has openings 104, 105 which are aligned with pipetting openings 15 respectively 16 when closure mechanism 17 is mounted on cover 14. Lower plate 27 has openings 106, 107 which are aligned with openings 104, 105 of upper plate 26 and thereby also aligned with pipetting openings 15 respectively 16 of cover 14 when closure mechanism 17 is assembled and mounted on cover 14, e.g. by means of screws.

Lower plate 27 has a guide element 108 which guides slide element 21 when it is displaced along a longitudinal axis 109 which passes through the centers of openings 24 and 25 of slide element 21.

Fig. 13 shows a top view of the part of closure mechanism 17 shown by Fig. 12 with slide element 21 in a first position at which the body of slide element 21 closes pipetting openings 15, 16 of cover 14 of the central part of the apparatus of Figures 1, 2 and 8. The position of slide element 21 shown by Fig. 13 corresponds to a first state of closure mechanism 17.

Fig. 14 shows a top view of the part of the movable closure shown by Fig. 12 with slide element 21 in a second position at which openings 24, 25 of slide element 21 are aligned with pipetting openings 15, 16 of cover 14 of the central part of the apparatus of Figures 1, 2 and 8. Fig. 14 thus shows the position of slide element 21 at which pipetting openings 15, 16 are open and allow insertion of pipetting needle 13 therethrough. The position of slide element 21 shown by Fig. 14 corresponds to a second state of closure mechanism 17.

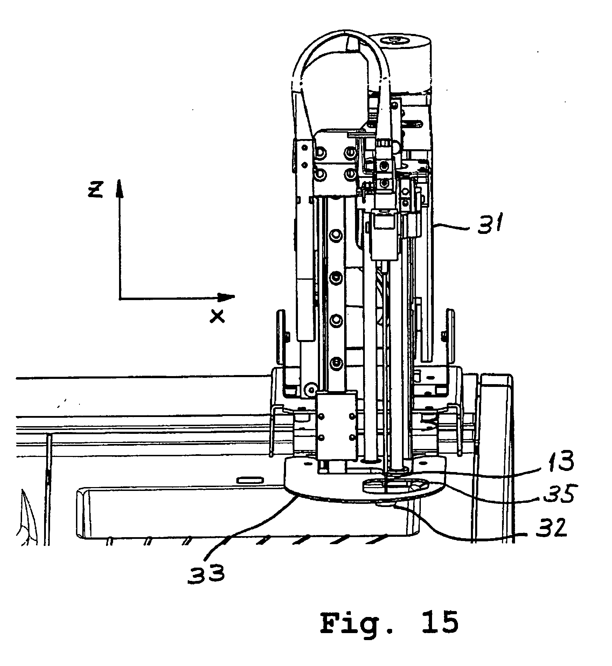

Fig. 15 shows a partial perspective view of transport device 31 shown in Figures 2 and 8 which transports pipetting needle 13 along an axis parallel to the X-axis represented in Fig. 15.

Transport device 31 comprises a lower plate 33 which has an opening 35 which allows passage of pipetting needle 13 therethrough. A permanent magnet 32 is attached by suitable means to the outer surface of lower plate 33. For this purpose permanent magnet 32 is e.g. arranged in a magnet holder which is mounted by means of screws on lower plate 33.

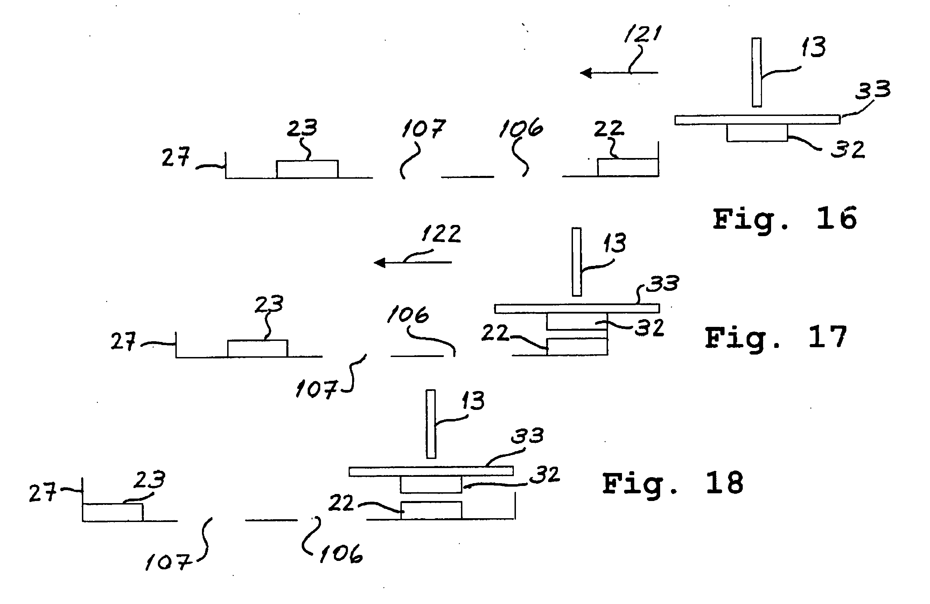

When transport device 31 is used for bringing pipetting needle to a pipetting position, permanent magnet 32 attached to lower plate 33 of transport device 31 is used for moving slide element 21 of closure mechanism 17 (described above with reference to Figures 10 to 14) as described hereinafter with reference to Figures 16 to 22.

Figures 16 to 22 illustrate various positions of magnet 32 attached to transport device 31 of pipetting needle 13 with respect to the magnets 22, 23 attached to slide element 21 of closure mechanism 17 of cover 14 of the central part of the apparatus shown by Figures 1, 2 and 8.

Fig. 16 shows an initial position of magnet 32 with respect to magnets 22 and 23 on slide element 21 when the position of pipetting needle 13 with respect to closure mechanism 17 is as shown in Figure 8 and the position of slide element 21 with respect to the lower plate 27 of closure mechanism 17 is as shown in Figure 13. In this position the body of slide element 21 closes pipetting openings 15 and 16.

Starting from the position of pipetting needle 13 shown in Fig. 16, pipetting needle 13 is moved by transport device 31 in the sense indicated by an arrow 121 in Fig. 16 towards a pipetting position.

On its way towards a pipetting position, pipetting needle 13 reaches the position shown by Fig. 17 at which magnet 32 is in face of magnet 22 on slide element 21. Magnets 22 and 32 are of opposite polarity. Therefore, when pipetting needle 13 is moved further in the sense indicated by an arrow 122 in Fig. 17, magnet 32 pulls magnet 22 and thereby moves slide element 21 in the sense of arrow 111 until slide element 21 reaches the position shown in Fig. 18, which is the position of slide element 21 with respect to the lower plate 27 of closure mechanism 17 shown in Figure 14. In this position of slide element 21 openings 24, 25 thereof are aligned with pipetting openings 15, 16 of cover 14 which are thus open and allow insertion of pipetting needle 13 therethrough.

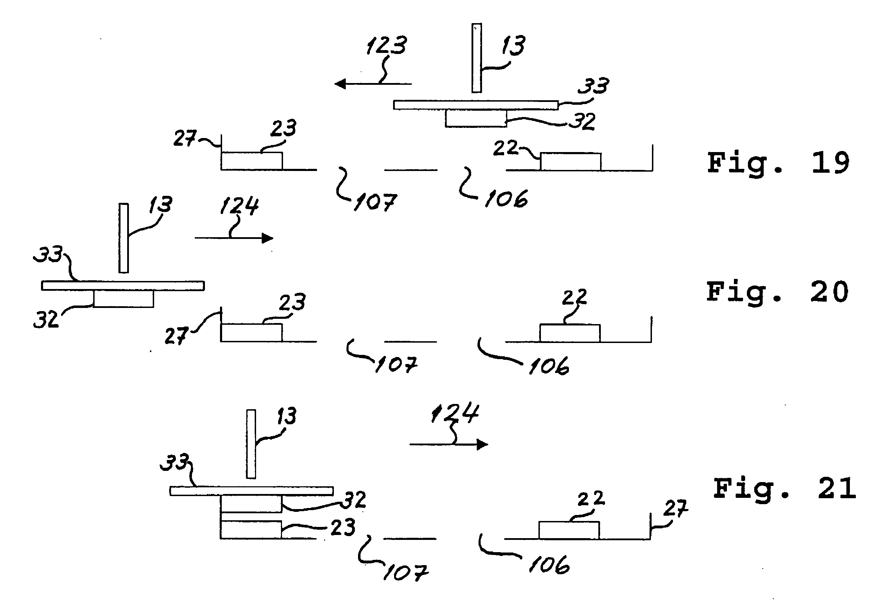

When pipetting needle 13 is moved further in the sense indicated by an arrow 122 in Fig. 17, magnet 32 reaches the pipetting position shown in Fig. 19. Magnet 22 cannot be pulled further by magnet 32, because slide element abuts lower plate 27 and cannot move further in that sense.

Pipetting needle 13 is moved further in the sense indicated by arrow 123 shown in Fig. 19 to an end position shown by Fig. 20. Pipetting needle 13 is then moved in the sense indicated by arrow 124 shown in Fig. 20.

When pipetting needle 13 is at the position shown by Fig. 21 magnets 23 and 32 aligned with each other. When pipetting needle 13 is moved further in the sense indicated by arrow 124 in Fig. 21, magnet 32 pulls magnet 23 and thereby slide element 21 into a position where openings 106 and 107 are open. When pipetting needle 13 reaches a position at which it is aligned with opening 106, pipetting needle 13 is lowered by transport device 31, passes through opening 106 of lower plate 27 of closure mechanism 17, enters into a reagent container the upper open end of which is aligned with opening 106 and aspires an aliquot of reagent from that reagent container.

An alternative example for the motion of the pipetting needle is described hereinafter with reference to Figures 20 to 22. In this example, further movement of pipetting needle 13 in the sense of arrow 123 in Fig. 19 brings pipetting needle 13 to a second pipetting position at which pipetting needle 13 is aligned with opening 107 of the lower plate 27 of closure mechanism 17. With pipetting needle 13 in this position a second pipetting operation similar to the above described with reference to Fig. 19 is effected in another reagent container.

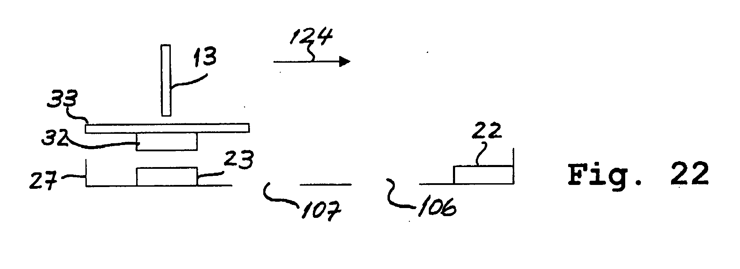

After this second pipetting operation pipetting needle is moved further in the sense of arrow 123 in Fig. 19 until it takes the position shown in Fig. 20. Transport device 31 moves then pipetting needle 13 from its position shown in Fig. 20 in the sense of arrow 124 in Fig. 20, along this motion magnet 32 reaches the position shown in Fig. 21. As transport device 31 moves then pipetting needle 13 further in the sense of arrow 124, magnet 32 pulls magnet 23 and thereby moves slide element 21 in the sense of arrow 124 until slide element 21 reaches the position shown in Fig. 22, which is the position of slide element 21 with respect to the lower plate 27 of closure mechanism 17 shown in Figure 13. In this position the body of slide element 21 closes pipetting openings 15 and 16.

After this last operation transport device 31 moves pipetting needle further in the sense of arrow 124 and brings pipetting 13 to its initial position shown in Fig. 16.

The course of action described above with reference to Figures 16 to 22 shows that with the apparatus described with reference to Figures 1-15, the magnet 32 attached to transport device 31 of the pipetting needle cooperates with the magnets 22, 23 of slide element 21 of closure mechanism 17 for opening pipetting openings 15, 16 just before pipetting needle reaches a pipetting position and for closing pipetting openings 15, 16 just after pipetting needle is withdrawn from a pipetting position and is moved back to its initial position. This operation of the closure mechanism 17 ensures that pipetting openings 15, 16 are opened just over short time intervals necessary for taking reagent aliquots from reagent containers with the pipetting needle and are closed the rest of the time. The main advantage of this is that the amount of amount of water vapor condensation in the reagent containers and in the interior of the housing 116 (of reagent container assembly 93) where the reagent containers are lodged is considerably reduced.

The main advantage of the embodiment of closure mechanism 17 described with reference to Figures 8 to 22 is that the mechanism for the actuation of the closure mechanism 17 is very simple, and does not require a dedicated drive mechanism for moving slide element 21, because magnet 32 attached to transport device 31 of pipetting needle 13 is used for that purpose. Moreover slide element 21 is moved back and forth only by magnetic forces. Slide element 21 is thus not subject to any mechanical stress of the kind to expected if slide element would be moved by drive means mechanically connected with it.

### Example of a second closure mechanism for the pipetting openings

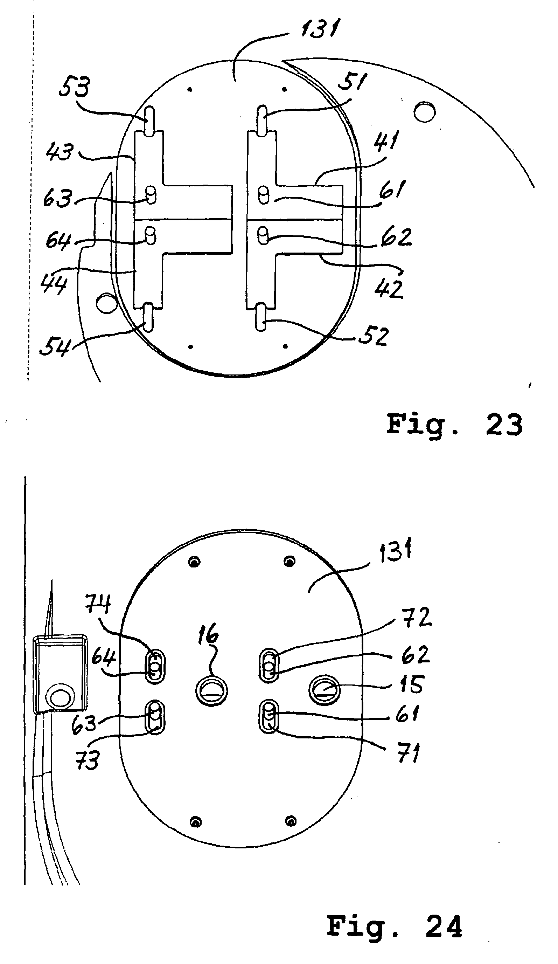

A second embodiment of closure mechanism 17 for the apparatus described above with reference to Figures 1 to 7 is described hereinafter with reference to Figures 23 to 28.

Fig. 23 shows a bottom plan view of a part of a second embodiment of closure mechanism 17 of the pipetting openings 15 and 16 in cover 14 of the central part of the analyzer of Figures 1 and 8. This second embodiment closure mechanism 17is mounted on the inner surface of cover 14, e.g. by means of screws. A thermal insulation plate 131 is located between the inner surface of cover 14 and closure mechanism 17.

As shown by Fig. 23, the second embodiment of closure mechanism 17 comprises at first pair of slide elements 41, 42 for closing and opening pipetting opening 15 and a second pair of slide elements 43, 44 for closing and opening pipetting opening 16.

Slide elements 41, 42 are held in a first position shown in Fig. 23 by springs 51, 52 which exert forces of opposite senses on slide elements 41, 42 and press them against each other. In the same way, Slide elements 43, 44 are held in a first position shown in Fig. 23 by springs 53, 54 which exert forces of opposite senses on slide elements 43, 44 and press them against each other.

The positions of slide elements 41, 42, 43, 44 in Fig. 23 correspond to a first state of the second embodiment of closure mechanism 17. When slide elements 41, 42, 43, 44 are in the positions shown in Fig. 23, they close pipetting openings 15 and 16.

Each of the slide elements 41, 42, 43, 44 shown in Fig. 23 has a plane upper surface and a pin 61, 62, 63, 64 respectively which extends upwards in a direction which is perpendicular to the upper surface of slide element 41, 42, 43, 44.

As shown by Fig. 24, cover 14 of the central part of the analyzer of Figures 1 and 8 has elongated openings 71, 72, 73, 74 each of which allows passage of a portion of one of slide pins 61, 62, 63, 64 therethrough and motion of said pin portion along the elongated opening 71, 72, 73, 74 respectively. The end portion of each of pins 61, 62, 63, 64 extends beyond the upper surface of movable cover 14.

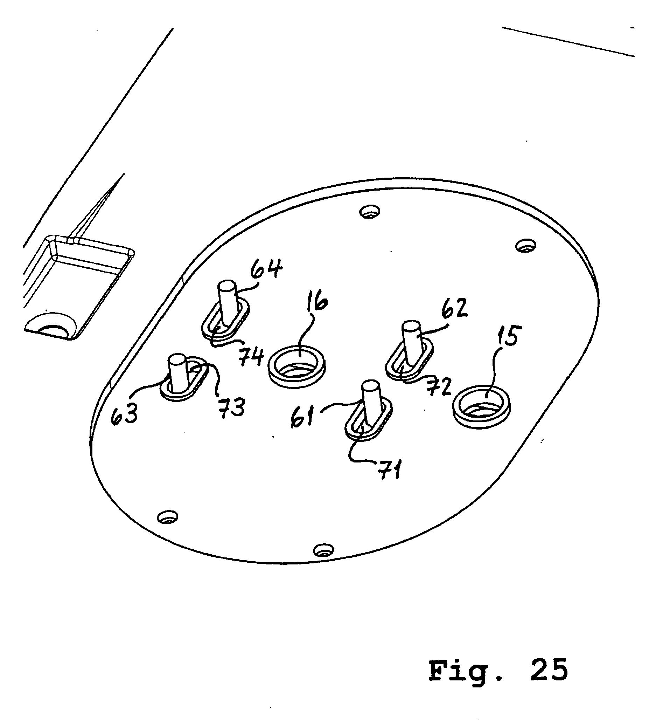

Fig. 25 shows a perspective view of cover 14 shown in Fig. 24

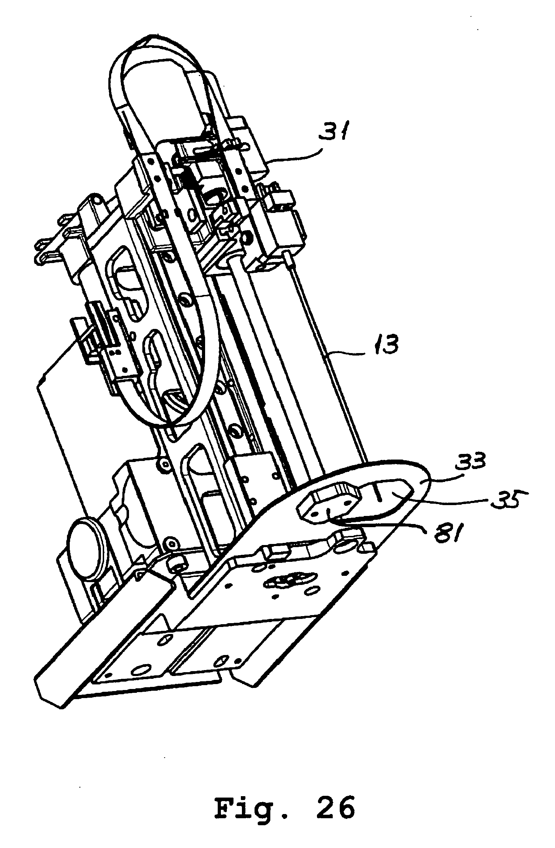

Fig. 26 shows a perspective view of a part of an embodiment of transport device 31 which transports pipetting needle 13 and which is suitable for actuating the second embodiment of closure mechanism 17. Fig. 26 shows in particular that this embodiment of transport device 31 carries a cam 81 which is attached to the outer surface of plate 33 which is part of transport device 31 and has opening 35 which allows passage of pipetting needle 13 therethrough.

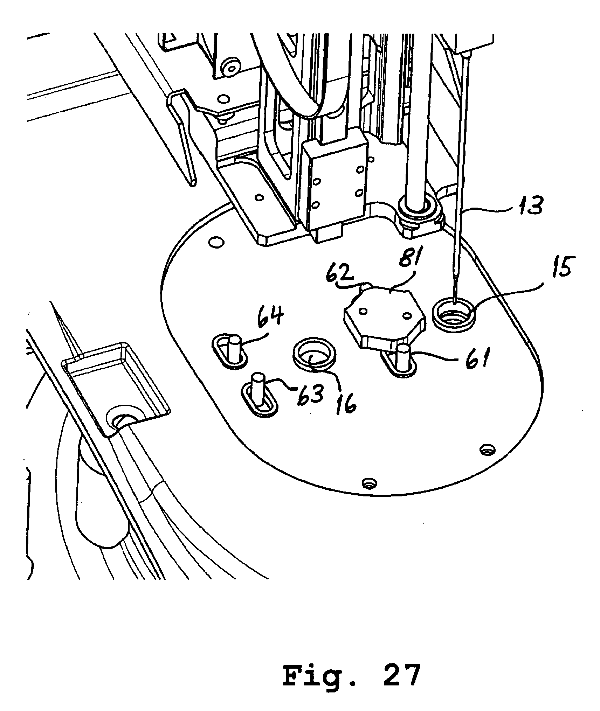

Figures 26 and 27 show the shape of cam 81 which is suitable for actuating the second embodiment of closure mechanism 17. For his purpose, pins 61, 62, 63, 64 of the slide elements 41, 42, 43, 44, cam 81, said pipetting needle 13 and the path followed by the pipetting needle 13 when it is moved by said transport device 31 thereof are so arranged and configured with respect to each other that
when transport device 31 moves pipetting needle 13 towards at least one pipetting position cam 81 contacts the upper end portions of the slide pins 61 and 62 and short after that contacts also the upper end portions of the slide pins also 63 and 64, pushes those pins apart against the forces exerted by springs 51, 52, 53, 54 and thereby brings slide elements 41, 42 respectively 43, 44 into a second position, which corresponds to a second state of the second embodiment of closure mechanism 17, and
when transport device 31 moves pipetting needle 13 away from the at least one pipetting position cam 81 moves away from the upper end portions of slide pins 61, 62 respectively 63, 64 and the springs 51, 52 respectively 53, 54 push slide elements 41, 42 respectively 43, 44 against each other and bring them back into their first position.

When cam 81 brings slide elements 41, 42 to their second position shown by Fig. 27, pipetting opening 15 is open. In a similar way, when slide elements 43, 44 are in their second position, i.e. pushed apart by cam 81, pipetting opening 16 is open.

Fig. 27 shows how cam 81 cooperates with pins 61, 62 respectively 63, 64 of the slide elements 41, 42 respectively 43, 44 for displacing those elements to positions where they leave pipetting openings 15 and 16 open.

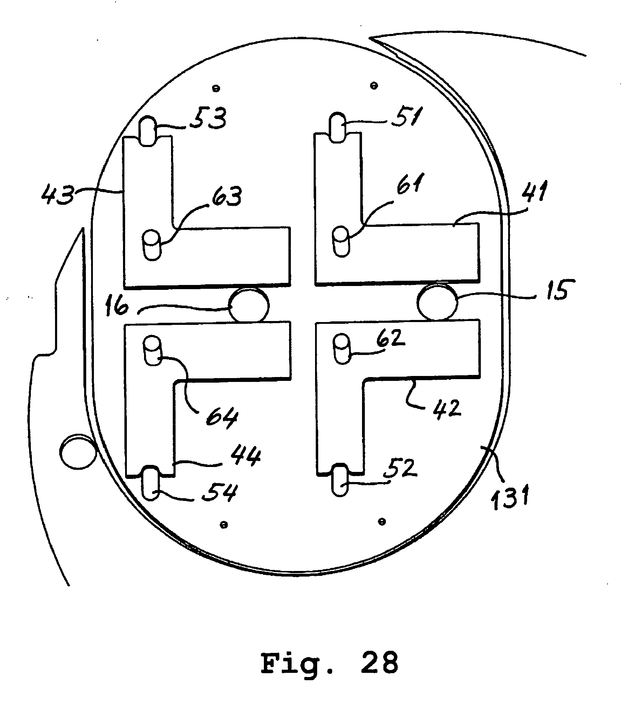

Fig. 28 shows a bottom plan view of a part of the second embodiment of closure mechanism 17 with the slide elements 41, 42, 43, 44 in positions at which they leave pipetting openings 15 and 16 open.

The operation of the second embodiment of closure mechanism 17 described above with reference to Figures 23 to 28 is such that cam 81 attached to transport device 31 of the pipetting needle cooperates with the pins 61, 62 respectively 63, 64 of slide elements 41, 42 respectively 43, 44 for opening pipetting openings 15, 16 just before pipetting needle reaches a pipetting position and for closing pipetting openings 15, 16 just after pipetting needle is withdrawn from a pipetting position and is moved further to another pipetting position or back to its initial position. This operation of the closure mechanism 17 ensures that pipetting openings 15, 16 are opened just over short time intervals necessary for taking reagent aliquots from reagent containers with the pipetting needle and are closed the rest of the time. The main advantage of this is that the amount of amount of water vapor condensation in the reagent containers and in the interior of the housing where the reagent containers are lodged is considerably reduced.

The main advantage of the second embodiment of closure mechanism 17 described with reference to Figures 23 to 28 is that the mechanism for the actuation of the closure mechanism 17 is very simple, and does not require a dedicated drive mechanism for moving each of slide elements 41, 42, 43, 44, because cam 81 attached to transport device 31 of pipetting needle 13 is used for that purpose.

### Example of a third closure mechanism for the pipetting openings

A third embodiment of closure mechanism 17 for the apparatus described above with reference to Figures 1 to 7 is a modified form of the second embodiment of closure mechanism 17 described above with reference to Figures 23 to 28. The modification consisting in that the third embodiment of closure mechanism 17 comprises a solenoid actuator for actuating each of the slide elements 41, 42, 43, 44, each of which is connected to the movable part of one of the solenoid actuators, and in that the solenoid actuators are controlled by control means which control the operation of transport device 31 of pipetting needle 13. In this third embodiment of closure mechanism 17, slide elements 41, 42 respectively 43, 44 are held in a first position by springs of the solenoid actuators in their non-operated state, and these springs exert forces of opposite senses on slide elements 41, 42 respectively 43, 44 and press them against each other. The first position of the slide elements 41, 42 respectively 43, 44 corresponds to the first state of the third embodiment of closure mechanism 17. In the third embodiment of closure mechanism 17, the control means which control the operation of the solenoid actuators and the operation of transport device 31 of pipetting needle 13 are so configured that
when the transport device 31 moves the pipetting needle 13 towards a pipetting position and the latter reaches that position the control means operate the solenoid actuators and these pull two of the slide elements 41, 42 respectively 43, 44 apart against the forces exerted by the springs of the solenoid actuators and bring the slide elements 41, 42 respectively 43, 44 into a second position, said second position of the slide elements 41, 42 respectively 43, 44 corresponding to the second state of closure mechanism 17, and
when transport device 31 moves the pipetting needle 13 away from a pipetting position the control means leave the solenoid actuators non-operated and the springs of the solenoid actuators push two of the slide elements 41, 42 respectively 43, 44 against each other and bring them back into their first position,
the pipetting opening 15, 16 being closed when slide elements 41, 42 respectively 43, 44 being in their first position and said pipetting opening 15, 16 being open when slide elements 41, 42 respectively 43, 44 are in their second position.

The operation of the third embodiment of closure mechanism 17 described above is such that the means which control transport device 31 control the above mentioned solenoids in such a way that pipetting openings 15, 16 are opened just before pipetting needle reaches a pipetting position and pipetting openings 15, 16 are closed just after pipetting needle is withdrawn from a pipetting position and is moved further to another pipetting position or back to its initial position. This operation of the third embodiment of closure mechanism 17 ensures that pipetting openings 15, 16 are opened just over short time intervals necessary for taking reagent aliquots from reagent containers with the pipetting needle and are closed the rest of the time. The main advantage of this is that the amount of amount of water vapor condensation in the reagent containers and in the interior of the housing where the reagent containers are lodged is considerably reduced.

Although preferred embodiments of the invention have been described using specific terms, such description is for illustrative purposes only, and it is to be understood that changes and variations may be made without departing from the scope of the following claims.

## Claims

1. A clinical chemistry analytical apparatus for automatically analyzing a plurality of samples of biological fluids, wherein aliquots of said samples are mixed with aliquots of selected reagent liquids in reaction cuvettes for forming sample-reagent-mixtures contained in a plurality of reaction cuvettes
said apparatus comprising:
(a) an array of reagent containers and and an array of reaction cuvettes, each of said reagent containers and reaction cuvettes having an opening at its upper end,
(b) an automatic pipetting unit (12) having a pipetting needle (13) for taking an aliquot of reagent from one of said reagent containers and for delivering said aliquot into one of said reaction cuvettes, said automatic pipetting (12) unit having a transport device (31) for moving said pipetting needle (13) to at least one pipetting position, said transport device (31) being adapted for moving said pipetting needle (13) along a first axis which extends in vertical direction and along a second axis which is perpendicular to said first axis,
(c) a movable cover (14) covering a chamber (18) in which reagent containers are stored, said cover (14) having a closed position at which it closes said chamber (18),
said cover (14) having at least one pipetting opening (15, 16) which allows insertion of said pipetting needle (13) therethrough, the center of said at least one pipetting opening (15, 16) being located at said at least one pipetting position,
(d) a closure mechanism (17) mounted on said cover (14), said closure mechanism (17) being adapted for being brought into a first state and into a second state, ,
said at least one pipetting opening (15, 16) being closed when said closure mechanism (17) is in said first state and said at least one pipetting opening (15, 16) being open when said closure mechanism (17) is in said second state
(e) transport means for automatically transporting each of said reagent containers to a pipetting position, at which the opening at the upper end of the reagent container is aligned with said at least one pipetting opening (15, 16) of said cover (14), and
(f) means for automatically actuating said closure mechanism (17) to bring it into its second state before introducing said pipetting needle (13) through said at least one pipetting opening (15, 16) and for automatically actuating said closure mechanism (17) to bring it into its first state after withdrawal of said pipetting needle (13) from said at least one pipetting opening (15, 16),
said apparatus being **characterized in that**
said means for automatically actuating said closure mechanism (17) are adapted for being actuated by a displacement of said transport device (31) associated with the motion thereof that moves said pipetting needle (13) along said second axis to said at least one pipetting position, respectively away from said at least one pipetting position.

2. An apparatus according to claim 1, wherein
(a) said closure mechanism (17) comprises a slide element (21) which has a first permanent magnet (22) attached thereto and which has at least one opening (24) which allows insertion of the pipetting needle (13) therethrough,
said slide element (21) being in a first position when said closure mechanism (17) is in said first state and in a second position when said closure mechanism (17) is in said second state,
said at least one opening (24) of the slide element (21) being aligned with said at least one pipetting opening (15, 16) when said slide element (21) is in said second position and said slide element (21) closing said at least one pipetting opening (15, 16) when said slide element (21) is in said first position,
(b) a second permanent magnet (32) is attached to said transport device of the pipetting needle (13), and
(c) said at least one opening (24) of the slide element (21), said first permanent magnet (22), said second permanent magnet (32), said pipetting needle (13) and the path followed by the pipetting needle (13) when it is moved by said transport device (31) thereof are so arranged with respect to each other that
when the transport device (31) moves the pipetting needle (13) towards said at least one pipetting position said second permanent magnet (32) passes close to said first permanent magnet (22) and exerts on it a magnetic force which pulls the slide element (21) towards its second position, and
when the transport device (31) moves the pipetting needle (13) away from said at least one pipetting position said second permanent magnet passes close to said first permanent magnet and exerts on it a magnetic force which pulls the slide element (21) towards its first position.

3. An apparatus according to claim 1, wherein
(a) said closure mechanism (17) comprises at least one pair of slide elements (41, 42 respectively 43, 44) which are held in a first position by springs (51, 52 respectively 53, 54) which exert forces of opposite senses on the slide elements and press them against each other, said first position of the slide elements corresponding to said first state of said closure mechanism (17),
(b) each of the slide elements (41, 42, 43, 44) of said at least one pair having a plane upper surface and a pin (61, 62, 63, 64) which extends upwards in a direction which is perpendicular to said upper surface of the slide element (41, 42, 43, 44),
(c) said movable cover (14) having elongated openings (71, 72, 73, 74) each of which allows passage of a part of one of said pins (61, 62, 63, 64) therethrough and motion of said pin (61, 62, 63, 64) along said elongated opening (71, 72, 73, 74), the end portion of said pin extending beyond the upper surface of said movable cover (14),
(d) a cam (81) attached to said transport device (31) of the pipetting needle (13),
(e) said pins (61, 62 respectively 63, 64) of the slide elements (41, 42 respectively 43, 44), said cam (81), said pipetting needle (13) and the path followed by the pipetting needle (13) when it is moved by said transport device (31) thereof are so arranged and configured with respect to each other that
when the transport device (31) moves the pipetting needle (13) towards said at least one pipetting position said cam (81) contacts the upper end portions of said pins (61, 62 respectively 63, 64) and pushes them apart against the forces exerted by the springs (51, 52 respectively 53, 54) and thereby brings the slide elements (41, 42 respectively 43, 44) into a second position, said second position of the slide elements (41, 42 respectively 43, 44) corresponding to said second state of said closure mechanism (17), and
when the transport device (31) moves the pipetting needle (13) away from said at least one pipetting position said cam (81) moves away from the upper end portions of the slide pins (61, 62 respectively 63, 64) and the springs (51, 52, 53, 54) push the slide elements (41, 42 respectively 43, 44) against each other and bring them back into their first position,
(f) said at least one pipetting opening (15, 16) being closed when said slide elements (41, 42 respectively 43, 44) are in their first position and said at least one pipetting opening (15, 16) being open when said slide elements (41, 42 respectively 43, 44) are in their second position.

4. An apparatus according to claim 1, wherein
(a) said closure mechanism (17) comprises at least one pair of solenoid actuators controlled by control means which control the operation of said transport device of the pipetting needle (13), and
at least one pair of slide elements (41, 42, 43, 44) each of which is connected to the movable part of one of said solenoid actuators,
said slide elements being (41, 42, 43, 44) held in a first position by springs of said solenoid actuators in their non-operated state, said springs exerting forces of opposite senses on the slide elements and pressing them against each other, said first position of the slide elements (41, 42, 43, 44) corresponding to said first state of said closure mechanism (17),
(b) said control means which control the operation of said at least two solenoid actuators and the operation of said transport device of the pipetting needle (13) being so configured that
when the transport device (31) moves the pipetting needle (13) towards said at least one pipetting position and the latter reaches said position the control means operate the solenoid actuators and these pull two of the at least one pair of slide elements (41, 42, 43, 44) apart against the forces exerted by the springs of the solenoid actuators and bring the slide elements (41, 42, 43, 44) into a second position, said second position of the slide elements corresponding to said second state of said closure mechanism (17), and
when the transport device (31) moves the pipetting needle (13) away from said at least one pipetting position said control means leave said solenoid actuators non-operated and the springs of the solenoid actuators push two of the at least one pair of slide elements (41, 42, 43, 44) against each other and bring them back into their first position,
(c) said at least one pipetting opening (15, 16) being closed when said slide elements (41, 42, 43, 44) are in their first position and said at least one pipetting opening (15, 16) being open when said slide elements (41, 42, 43, 44) are in their second position.

5. An apparatus according to claim 1, wherein said cover (14) of said chamber (18) is an air-tight closure thereof when it is in its closed position.

6. An apparatus according to claim 1, wherein said at least one pipetting opening (15, 16) is just large enough to allow insertion of said pipetting needle (13) therethrough.

7. An apparatus according to claim 1, wherein said means for automatically actuating said closure mechanism (17) bring it into its second state immediately before introducing said pipetting needle (13) through said at least one pipetting opening (15, 16) and bring it into its first state immediately after withdrawal of said pipetting needle (13) from said at least one pipetting opening (15, 16).
